# EUROPÄISCHE PATENTANMELDUNG

(11) **EP 4 194 315 A1**
(43) Veröffentlichungstag der Anmeldung: **14.06.2023**
(21) Anmeldenummer: 21214028.9
(22) Anmeldetag: 13.12.2021
(51) Int. Cl.: B62D 3/12, B21K 1/76

(54) **ZAHNSTANGE UND VERFAHREN ZUR HERSTELLUNG EINER ZAHNSTANGE FÜR EIN LENKGETRIEBE EINES KRAFTFAHRZEUGS, UND LENKGETRIEBE FÜR EIN KRAFTFAHRZEUG**

(71) Anmelder: thyssenkrupp Presta Aktiengesellschaft, 9492 Eschen (LI); thyssenkrupp AG, 45143 Essen (DE)
(72) Erfinder: Dohmann, Jürgen, 14548 Schwielowsee OT Caputh (DE)
(74) Vertreter: thyssenkrupp Intellectual Property GmbH

(57) **Zusammenfassung**

Die vorliegende Erfindung betrifft eine Zahnstange (3) für ein Lenkgetriebe eines Kraftfahrzeugs, die sich in Längsrichtung einer Längsachse (L) axial erstreckt und einen Verzahnungsabschnitt mit einer Verzahnung (31) aufweist, und die in mindestens einem axialen Endbereich einen Anschlussabschnitt (32, 34) mit einem Anschlusselement zur Verbindung mit einer Spurstange (4) aufweist, wobei der Verzahnungsabschnitt und der Anschlussabschnitt (32, 34) einstückig ausgebildet sind. Um einen verbesserten Anschlussabschnitt (32, 34) mit geringerem Fertigungsaufwand bereitzustellen, schlägt die Erfindung vor, dass der Anschlussabschnitt (32, 34) eine plastische Umformung aufweist.

## Beschreibung

### Stand der Technik

Die Erfindung betrifft eine Zahnstange für ein Lenkgetriebe eines Kraftfahrzeugs, die sich in Längsrichtung einer Längsachse axial erstreckt und einen Verzahnungsabschnitt mit einer Verzahnung aufweist, und die in mindestens einem axialen Endbereich einen Anschlussabschnitt mit einem Anschlusselement zur Verbindung mit einer Spurstange aufweist, wobei der Verzahnungsabschnitt und der Anschlussabschnitt einstückig ausgebildet sind. Ein Lenkgetriebe und ein Verfahren zur Herstellung einer Zahnstange sind ebenfalls Gegenstand der Erfindung.

In einer als Zahnstangenlenkung ausgebildeten Fahrzeuglenkung wird ein Lenkbefehl als Drehbewegung in die Lenkwelle eingebracht, auf der ein Ritzel angebracht ist, welches mit der Verzahnung einer Zahnstange in einem Lenkgetriebe kämmt. Die Zahnstange ist in dem Lenkgetriebe in axialer Richtung, d.h. in Richtung ihrer Längsachse verschiebbar gelagert, so dass eine Drehung des Ritzels in eine translatorische Bewegung der Zahnstange in deren Längsrichtung umgesetzt wird. Anschlussabschnitte der Zahnstange sind mit Spurstangen verbunden, welche an den Achsschenkeln der zu lenkenden Räder angelenkt sind, so dass die translatorische Bewegung der Zahnstange in einen Lenkeinschlag der Räder umgesetzt wird.

In der gattungsgemäßen Bauform ist die Zahnstange einschließlich der im Verzahnungsabschnitt angeordneten Verzahnung und den in der Regel in den beiden Endbereichen angeordneten Anschlussabschnitten einstückig ausgebildet. Ein Anschlussabschnitt kann als Anschlusselement beispielsweise einen Gewindeabschnitt mit einem Außengewinde aufweisen. Ein Axialgelenk kann zum Anschluss einer Spurstange auf diesen Gewindeabschnitt einfach axial aufgeschraubt werden, beispielsweise zur gelenkigen Aufnahme eines Kugelkopfes oder dergleichen.

Um die hohen im Betrieb wirkenden Lasten sicher aufzunehmen, ist es bekannt, die Zahnstange durch Warmumformung, speziell als Schmiedeteil aus Stahl herzustellen, wobei die Verzahnung geschmiedet sein kann, wie beispielsweise aus der DE 10 2016 212 303 A1 bekannt ist. Dabei ist es bekannt, die Anschlusselemente, beispielsweise Gewindeabschnitte, nach der schmiedetechnischen Umformung durch spanende Bearbeitung des Schmiedeteils zu erzeugen. Die Bearbeitung des hochfesten Schmiedeteils ist jedoch aufwendig. Um den Bearbeitungsaufwand möglichst gering zu halten, ist es bekannt, das Außengewinde in den Außenumfang der Zahnstange zu schneiden, wobei der Außendurchmesser nicht oder lediglich geringfügig verringert wird. Entsprechend dem großen Außendurchmesser des Außengewindes muss das darauf angebrachte Anschlussstück des Axialgelenks ebenfalls relativ groß dimensioniert sein, wodurch sich ein nachteilig hoher Bauraumbedarf ergibt. Eine Bearbeitung zur Erzeugung eines kleineren Gewindedurchmessers würde jedoch zu einem nachteilig hohen Fertigungsaufwand führen.

Angesichts der vorangehend erläuterten Problematik ist es eine Aufgabe der vorliegenden Erfindung, einen verbesserten Anschlussabschnitt mit geringerem Fertigungsaufwand bereitzustellen.

### Darstellung der Erfindung

Diese Aufgabe wird erfindungsgemäß gelöst durch die Zahnstange mit den Merkmalen des Kennzeichens des Anspruchs 1, das Lenkgetriebe mit den Merkmalen des Kennzeichens des Anspruchs 8 und das Verfahren mit den Merkmalen des Kennzeichens des Anspruchs 9. Vorteilhafte Weiterbildungen ergeben sich aus den Unteransprüchen.

Bei einer Zahnstange für ein Lenkgetriebe eines Kraftfahrzeugs, die sich in Längsrichtung einer Längsachse axial erstreckt und einen Verzahnungsabschnitt mit einer Verzahnung aufweist, und die in mindestens einem axialen Endbereich einen Anschlussabschnitt mit einem Anschlusselement zur Verbindung mit einer Spurstange aufweist, wobei der Verzahnungsabschnitt und der Anschlussabschnitt einstückig ausgebildet sind, ist erfindungsgemäß vorgesehen, dass der Anschlussabschnitt eine plastische Umformung aufweist.

Die Zahnstange weist einen in Längsrichtung langgestreckten, stangenförmigen, einstückig ausgebildeten Grundkörper auf, wie im Stand der Technik bekannt mit einem runden oder mehreckigen Querschnitt. Die Verzahnung und ein oder mehrere Anschlusselemente sind einstückig mit der Zahnstange ausgebildet, bevorzugt durch Umformung eines massiven Grundkörpers, vorzugsweise aus Stahl.

Soweit im Folgenden von dem oder einem Anschlussabschnitt die Rede ist, so schließt dies die Ausbildung von zwei Anschlussabschnitten ein, die bevorzugt spiegelbildlich gleich ausgebildet sein können und an den beiden entgegengesetzten Endbereichen der Zahnstange angeordnet sind.

Erfindungsgemäß ist vorgesehen, dass mindestens ein Anschlusselement als plastisch umgeformter Abschnitt einstückig mit der Zahnstange ausgebildet ist. Das Anschlusselement ist als plastisches Umformteil ausgebildet. Die für die Funktion des Anschlussabschnitts maßgebliche Formgebung des mindestens einen Anschlusselements, und insbesondere auch die Materialstruktur des Anschlusselements ist dabei durch die plastische Umformoperation bestimmt.

Bevorzugt ist das Anschlusselement als plastisch umgeformter Abschnitt integral einstückig mit der Zahnstange ausgebildet.

Durch die plastische Umformung im Bereich des Anschlussabschnitts wird ein Materialgefüge mit einer hohen Festigkeit erzeugt, wobei die Gefügelinien von dem oder den plastisch umgeformten Anschlusselementen unterbrechungsfrei in die Zahnstange übergehen. Durch die im Vergleich mit spanend erzeugten Anschlusselementen höhere Festigkeit kann ein kleinerer Querschnitt des Anschlussabschnitts realisiert werden, ohne die Belastbarkeit zu beeinträchtigen. Die ermöglicht eine Bauraum sparende Anbindung der Spurstangen und eine kompakte und gewichtsreduzierte Bauweise des Lenkgetriebes.

Die Zahnstange kann über ihre gesamte Länge, in Längsrichtung über die vorzugsweise beiderseits außen liegenden Anschlussabschnitte gemessen, einschließlich Verzahnungs- und Anschlussabschnitten, bevorzugt durchgehend oder abschnittweise massiv ausgebildet sein. Eine massive Bauweise aus Vollmaterial zeichnet sich durch einen durchgehenden Materialquerschnitt der Zahnstange aus, und ermöglicht eine besonders hohe Belastbarkeit bei relativ kleinen Abmessungen. Die Anschlussabschnitte können erfindungsgemäß mit optimierten Abmessungen, beispielsweise einem relativ kleinen Außenquerschnitt, erfindungsgemäß rationell durch Massivumformung des Vollmaterials gefertigt sein. Durch die erfindungsgemäße plastische Umformung wird eine rationellere und flexiblere Formgebung der Anschlusselemente ermöglicht. Durch einen plastischen Umformvorgang kann rationell ein hoher Umformgrad realisiert werden, so dass die äußere Form und die Abmessungen des Anschlussabschnitts flexibler gestaltet werden können, wobei der Bearbeitungsaufwand deutlich geringer sein kann als bei spanender Bearbeitung. Somit ist der der eingangs beschriebene Zielkonflikt im Stand der Technik zwischen möglichst geringem Fertigungsaufwand und kompakter Konstruktion gelöst.

Es ist vorteilhaft, dass der Anschlussabschnitt massivumgeformt wie gewalzt oder geschmiedet ist. Dabei erfolgt die plastische Umformung zur Erzeugung mindestens eines Anschlusselements durch Warmumformung, bevorzugt aus einem gut warmumformbaren Stahl, vorzugsweise bei einer definierten, für einen Schmiedevorgang angepassten Umformtemperatur. Erfindungsgemäß ist mindestens ein Anschlusselement ist als Warmumformteil bzw. Schmiedeteil einstückig mit dem Verzahnungsabschnitt ausgebildet. Durch das Schmieden können hohe Umformgrade und eine optimierte, hochfeste Gefügestruktur mit relativ geringem Fertigungsaufwand realisiert werden. Dabei wird insbesondere auch eine rationelle Massivumformung von Vollmaterial mit spezifischen vorteilhaften Eigenschaften ermöglicht, die durch Kaltumformverfahren nicht oder nur eingeschränkt realisierbar wäre.

Bevorzugt kann vorgesehen sein, dass der Anschlussabschnitt einen kleineren Querschnitt hat als der Verzahnungsabschnitt. Ein kleinerer Querschnitt bedeutet, dass der Außenquerschnitt verringert ist. Erfindungsgemäß wird hierzu durch plastische Umformung im Anschlussabschnitt ein kleinerer Materialquerschnitt erzeugt, wobei der Anschlussabschnitt bevorzugt massiv, aus Vollmaterial ausgebildet sein kann. Ein produktionstechnischer Vorteil ist, dass durch plastische Umformung, insbesondere durch Warmumformung wie Walzen, Schmieden oder dergleichen, mit geringerem Aufwand als im Stand der Technik eine Querschnittsverringerung erzeugt werden kann, insbesondere mit einem höheren Umformgrad zur Verkleinerung des Außenquerschnitts. Ein weiterer Vorteil ist, dass durch plastische Umformung eine optimierte Gefügestruktur mit höherer Festigkeit erzeugt werden kann. Konkret kann beim plastischen Umformen durch radiales Zusammenpressen, beispielsweise durch Formwalzen, Gesenkschmieden, ein Materialfluss in axialer Richtung erzeugt werden, so dass im Bereich des Anschlussabschnitts axiale Gefügelinien ausgebildet werden. Dadurch kann eine besonders hohe Festigkeit und Belastbarkeit realisiert werden, so dass in vorteilhafter Weise Bauraum und Gewicht eingespart werden können.

Eine vorteilhafte Ausführung kann dadurch realisiert sein, dass der Anschlussabschnitt einen Gewindeabschnitt aufweist. Ein Gewindeabschnitt ermöglicht eine montagefreundliche und sichere Schraubverbindung zur Anbindung einer Spurstange, beispielsweise durch ein mit dem Gewindeabschnitt verschraubbares Verbindungselement, wie einem Axialgelenk, Kugelgelenk oder dergleichen. Durch die Erfindung können die Abmessungen des Gewindeabschnitts rationell reduziert und angepasst werden, so dass eine kompakte Bauweise ermöglicht wird.

Es kann vorgesehen sein, dass der Gewindeabschnitt einen Gewindezapfen oder eine Gewindeöffnung, alternativ als Gewindebohrung bezeichnet, aufweist. Der Gewindezapfen ist bevorzugt zylindrisch und weist ein koaxiales Außengewinde auf, und die Gewindeöffnung entsprechend ein Innengewinde. Der Gewindezapfen kann erfindungsgemäß durch plastische Umformung eines Endabschnitts erzeugt werden, wobei der Außendurchmesser des Gewindezapfens bevorzugt geringer sein kann als der Außenumfang im Verzahnungsabschnitt. Die Gewindeöffnung kann bevorzugt stirnseitig plastisch in einen massiven, aus Vollmaterial gebildeten Querschnitt plastisch eingeformt sein. Dabei ist es vorteilhaft, dass der Gewindezapfen oder die Gewindeöffnung durch Warmumformung ausgebildet sind, beispielsweise durch Napfen oder Schmieden.

Vorzugsweise kann vorgesehen sein, dass der Gewindeabschnitt ein plastisch eingeformtes Gewinde aufweist. Dadurch ist es möglich, dass die vorteilhaften Materialeigenschaften, die durch die erfindungsgemäße plastische Umformung erzeugt werden können, unmittelbar auch zur Realisierung einer höheren Tragfähigkeit des Gewindes genutzt werden können. Die Belastbarkeit ist höher als bei einem geschnittenen Gewinde wie im Stand der Technik. Fertigungstechnisch ist es vorteilhaft, dass das Gewinde entweder unmittelbar im Anschluss an eine plastische Verformung zur Erzeugung eine Querschnittsverringerung in einen dabei gebildeten zylindrischen Zapfen oder eine zylindrische Öffnung eingebracht werden kann, wobei es möglich ist, die gesamte zur Erzeugung des Gewindes erforderliche plastische Umformung mittels geeigneter Werkzeuge in einem Arbeitsgang zu erzeugen. Bevorzugt ist eine rationelle Warmumformung mittels angepasster Schmiede-, Press- und/oder Walzwerkzeuge oder dergleichen möglich.

Es ist vorteilhaft, dass die Verzahnung in einem Schmiedeabschnitt ausgebildet ist. Dabei ist die Zahnstange bevorzugt als Ganzes, samt der Verzahnung und den Anschlusselementen im Anschlussabschnitt durch Warmumformung als Schmiedeteil ausgebildet oder weist ein solches zumindest im Bereich des Verzahnungsabschnitts auf. Dadurch werden die erwähnten Vorteile einer flexibel angepassten Ausgestaltung bei einer rationellen Fertigung ermöglicht. Das Schmiedeteil der Zahnstange kann vorzugsweise im Verzahnungsabschnitt und in den Anschlussabschnitten durchgehend massiv ausgebildet und weist ein über den Querschnitt durchgehendes Vollprofil auf. Dadurch können eine besonders hohe Belastbarkeit, ein geringer Bauraumbedarf und eine rationelle Fertigung realisiert werden.

In einer weiteren Ausführungsvariante kann die Zahnstange aus zwei miteinander mittels Reibschweißen oder Laserschweißen verbundenen Elementen gebildet sein, wobei eines der Elemente als das die Verzahnung aufweisende Element ausgebildet ist, wobei zumindest eines der Elemente ein Schmiedebauteil ist und einen erfindungsgemäßen Anschlussabschnitt aufweist.

Bei einem Lenkgetriebe für ein Kraftfahrzeug, umfassend eine in Richtung ihrer Längsachse verschieblich gelagerte Zahnstange, die eine Verzahnung und mindestens einen endseitigen Anschlussabschnitt aufweist, wobei in die Verzahnung ein drehbar gelagertes Lenkritzel eingreift, und ein Anschlussabschnitt ausgebildet ist zum Anschluss einer Spurstange einer Kraftfahrzeuglenkung, ist erfindungsgemäß vorgesehen, dass die Zahnstange ausgebildet ist gemäß einem der vorangehend Ausführungen oder Kombinationen der beschriebenen Merkmale aufweist.

Dadurch, dass die erfindungsgemäße Zahnstange mit geringeren Abmessungen und höherer Belastbarkeit bereitgestellt werden kann, wird eine kompaktere, leichtere Gestaltung des Lenkgetriebes einer Zahnstangenlenkung ermöglicht, wobei der Herstellungsaufwand gegenüber dem Stand der Technik geringer sein kann.

Bei einem Verfahren zur Herstellung einer Zahnstange für ein Lenkgetriebe eines Kraftfahrzeugs, die sich entlang einer Längsachse erstreckt und mindestens einen Verzahnungsabschnitt mit einer Verzahnung und mindestens einen mit dem Verzahnungsabschnitt einstückig ausgebildeten Anschlussabschnitt aufweist, bei dem die Verzahnung und der Anschlussabschnitt an einem Rohling ausgebildet werden, ist erfindungsgemäß vorgesehen, dass der Anschlussabschnitt durch plastische Umformung des Rohlings erzeugt wird.

Bezüglich der Merkmale des erfindungsgemäßen Verfahrens wird im Folgenden in vollem Umfang Bezug genommen auf die vorangehenden Ausführungen zur Zahnstange und zum Lenkgetriebe.

In einem ersten Schritt des Verfahrens kann der Rohling bevorzugt als zylindrischer oder mehrkantiger Stangenabschnitt bereitgestellt werden, bevorzugt aus Stahl. Vorzugsweise kann Vollmaterial eingesetzt werden, welches einen massiv durchgehenden Materialquerschnitt hat.

Erfindungsgemäß erfolgt in einem folgenden Schritt die Erzeugung mindestens eines Anschlussabschnitts, bevorzugt von zwei spiegelbildlichen Anschlussabschnitten, durch plastische Umformung des Rohlings. Zur Erzeugung einer hohen Festigkeit ist es vorteilhaft, dass die plastische Umformung durch ein Warmumformverfahren erfolgt, beispielsweise durch ein Walzverfahren wie Formwalzen, ein Schmiedeverfahren wie Gesenkschmieden oder dergleichen.

Bevorzugt kann die Verzahnung durch plastische Umformung des Rohlings erzeugt werden, ebenfalls vorzugsweise durch Warmumformung, beispielsweise durch Schmieden.

Es ist vorteilhaft, dass die Anschlussabschnitte und die Verzahnung durch Warmumformung erzeugt werden. Dadurch kann die Zahnstange durch ein einziges, durchgehendes Schmiedeteil gebildet werden, in dem die Anschlussabschnitte und die Verzahnung einstückig plastisch eingeformt sind.

Das Verfahren kann weiter vorsehen, dass der Rohling auf eine Vorwärmtemperatur erwärmt wird, und eine Warmumformung zur Erzeugung des Anschlussabschnitts und des Verzahnungsabschnitts erfolgt.

Zur Realisierung der Warmumformung ist in einem Schritt des Verfahrens vorgesehen, dass der Rohling auf eine erhöhte Vorwärmtemperatur erwärmt wird, die auch als Umform- oder Schmiedetemperatur bezeichnet wird. Dabei kann der Rohling als Ganzes auf die Vorwärmtemperatur erwärmt werden, oder abschnittweise.

Wenn eine vorgegebene Vorwärmtemperatur erreicht ist, die abhängig vom Material und Umformparametern bestimmt werden kann, erfolgt die plastische Umformung mittels formgebender Werkzeuge, wie beispielsweise Schmiedegesenken, Schmiedestempeln, Walzen oder dergleichen, die in den vorgewärmten Rohling eingeformt werden. Dabei ist es vorteilhaft, dass in einem Umformschritt ein hoher Umformgrad realisiert werden kann, so dass es beispielsweise möglich ist, die Verzahnung und die Anschlussabschnitte rationell jeweils in einem Arbeitsgang, oder auch in einem gemeinsam erfolgenden Arbeitsgang zu erzeugen.

Es ist möglich, dass die Warmumformung zur Erzeugung des Anschlussabschnitts nach der Erwärmung auf die Vorwärmtemperatur vor der Warmumformung zur Erzeugung der Verzahnung erfolgt. Dabei kann der Temperaturabfall beim Erzeugen des oder der Anschlussabschnitte so gering sein, dass im Anschluss ohne weitere Erwärmung die Warmumformung zur Erzeugung der Verzahnung erfolgen kann, beispielsweise durch Gesenkschmieden. Dadurch wird eine vollautomatische Integration in einen seriellen Schmiedeprozess mit aufeinander folgenden Bearbeitungsstationen ermöglicht.

Alternativ kann vorgesehen sein, dass eine zeitlich parallele Erzeugung des Anschlussabschnitts und der Verzahnung erfolgt. Hierzu kann der Rohling bevorzugt im Ganzen durchgehend auf Vorwärmtemperatur erwärmt werden, und die Umformwerkzeuge können in derselben Bearbeitungsstation zur Umformung zeitlich parallel mit dem erwärmten Rohling in Umformeingriff gebracht werden. Durch die parallelen Umformprozesse wie beispielsweise durch Schmiedeprozesse zur Erzeugung der Anschlusselemente in den Anschlussabschnitten und der Verzahnung in dem Verzahnungsabschnitt kann die Effizient der Fertigung weiter erhöht werden. Darüber hinaus kann das Schmieden der Zahnstange in einer Hitze erfolgen, wodurch eine durchgehende, optimierte Gefügestruktur mit hoher Festigkeit realisierbar ist.

Zusätzlich oder alternativ ist es möglich, den Rohling partiell zu erwärmen, beispielsweise in den Endbereichen zur Erzeugung der Anschlussabschnitte. Dies ermöglicht eine flexible Fertigung, beispielsweise zur Erzeugung unterschiedlicher Typen von Anschlussabschnitten an Zahnstangen mit einem gleichartigen Verzahnungsabschnitt.

Bevorzugt kann vorgesehen sein, dass der Anschlussabschnitt auf einen kleineren Querschnitt umgeformt wird als der Verzahnungsabschnitt. Wie im Zusammenhang mit der Zahnstange oben erläutert, kann es zur Bauraumoptimierung vorteilhaft sein, dass der Anschlussabschnitt einen kleineren Außenquerschnitt aufweist, oder zumindest einen kleineren Materialquerschnitt. Durch das erfindungsgemäße Verfahren kann die dazu erforderliche plastische Umformung des Rohlings im Bereich des Anschlussabschnitts, beispielsweise durch Formwalzen oder Schmieden, im Wesentlichen ohne zusätzlichen Aufwand mit einem höheren Umformgrad als im Verzahnungsabschnitt erfolgen. Dabei werden die bereits erwähnten Vorteile einer höheren Festigkeit, und eines kleineren Bauraumbedarfs mit geringerem Fertigungsaufwand als im Stand der Technik realisiert werden.

Vorzugsweise kann vorgesehen sein, dass an den Rohling ein Zapfen angeformt oder eine Einformung eingeformt wird, und an den Zapfen oder in die Einformung ein Gewinde eingebracht wird. Dabei kann - bevorzugt durch die beschriebene Warmumformung - zunächst eine Vorform zur Erzeugung eines Gewindeabschnitts erzeugt werden, beispielsweise ein zylindrischer Zapfen oder eine zylindrische Öffnung oder Vertiefung. Anschließend kann dann ein Außen- oder Innengewinde eingeformt werden.

Vorzugsweise kann vorgesehen sein, dass das Gewinde durch plastische Umformung erzeugt wird. Dazu können die Gewindenuten und -zähne in den Umfang eingewalzt oder eingepresst werden, beispielsweise durch Warm- oder Kaltumformverfahren. Dadurch kann im Bereich des Gewindes eine optimierte, unterbrechungsfreie Gefügestruktur erzeugt werden, wodurch eine Tragfähigkeit als bei einem geschnittenen Gewinde realisiert werden kann. Außerdem ist der Fertigungsaufwand geringer.

Mittels speziell angepasster Umformwerkzeuge ist es möglich, in einem einzigen Arbeitsgang durch Warmumformung eine bereits ein Innengewinde aufweisende Einformung, also eine vollständige Gewindeöffnung, oder einen bereits ein Außengewinde aufweisenden Gewindezapfen zu erzeugen. Dies erfordert einen Schmiedestempel, der die Gewindekontur aufweist, und in einer schraubenförmigen, kombinierten Linear-Drehbewegung in den erwärmten Rohling plastisch eingeformt wird. Dadurch ist es möglich, das vollständige Gewinde in einer Hitze zu schmieden, was im Hinblick auf eine hohe Festigkeit vorteilhaft ist, und eine weiter optimierte Fertigung ermöglicht.

Im Falle der Ausbildung des Anschlussabschnitts mit einem Aussengewinde ist es grundsätzlich möglich, den Anschlussabschnitt sowie das Gewinde in einem einzigen Arbeitsgang herzustellen. Dafür wird der Anschlussabschnitt über einen ersten Umfangabschnitt der Walze erzeugt, wobei dieser erste Teilabschnitt der Walze durch den zylindrischen konturfreien Bereich der Walze gebildet ist. Die Walzen bewegen sich dabei ausschliesslich radial. Das Außengewinde wird anschließend direkt darauffolgender Rotation der Walzen durch den konturaufweisenden Umfangsabschnitt eingewalzt, wobei sich die Walzen hierbei relativ in Längsrichtung bewegen, wobei die Walzen in radialer Richtung stillstehen, sich also nicht in radialer Richtung bewegen.

### Beschreibung der Zeichnungen

Vorteilhafte Ausführungsformen der Erfindung werden im Folgenden anhand der Zeichnungen näher erläutert. Im Einzelnen zeigen:
- Figur 1: ein erfindungsgemäßes Kraftfahrzeug-Lenksystem in einer schematischen Darstellung,
- Figur 2: eine Teilansicht des erfindungsgemäßen Zahnstange des Lenksystems gemäß Figur 1,
- Figur 3: ein Rohteil einer Zahnstange in einem ersten Fertigungszustand eines erfindungsgemäßen Verfahrens zur Herstellung einer Zahnstange,
- Figur 4: das Rohteil der Zahnstange gemäß Figur 3 in einem zweiten Fertigungszustand,
- Figur 5: die Zahnstange gemäß Figur 4 in einem dritten Fertigungszustand,
- Figur 6: die Zahnstange gemäß Figur 5 in einem vierten Fertigungszustand,
- Figur 6a: eine Zahnstange in einer alternativen Ausführungsform,
- Figur 7a, b: eine schematische Darstellung eines Walzverfahrens zur Erzeugung eines Außengewindes eines als Gewindeabschnitt ausgebildeten Anschlussabschnitts,
- Figur 8a, b: eine schematische Darstellung eines alternativen Walzverfahrens zur Erzeugung eines Außengewindes eines als Gewindeabschnitt ausgebildeten Anschlussabschnitts,
- Figur 9: eine schematische Darstellung eines weiteren alternativen Walzverfahrens zur Erzeugung eines Außengewindes eines als Gewindeabschnitt ausgebildeten Anschlussabschnitts,
- Figur 10a,b,c: eine schematische Darstellung eines Umformverfahrens zur Erzeugung eines Gewinde-Kernlochs einer zweiten Ausführungsform einer erfindungsgemäßen Zahnstange,
- Figur 11: eine Zahnstange gemäß der zweiten Ausführungsform in einem ersten Fertigungszustand,
- Figur 12: die Zahnstange gemäß Figur 11 in einem zweiten Fertigungszustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

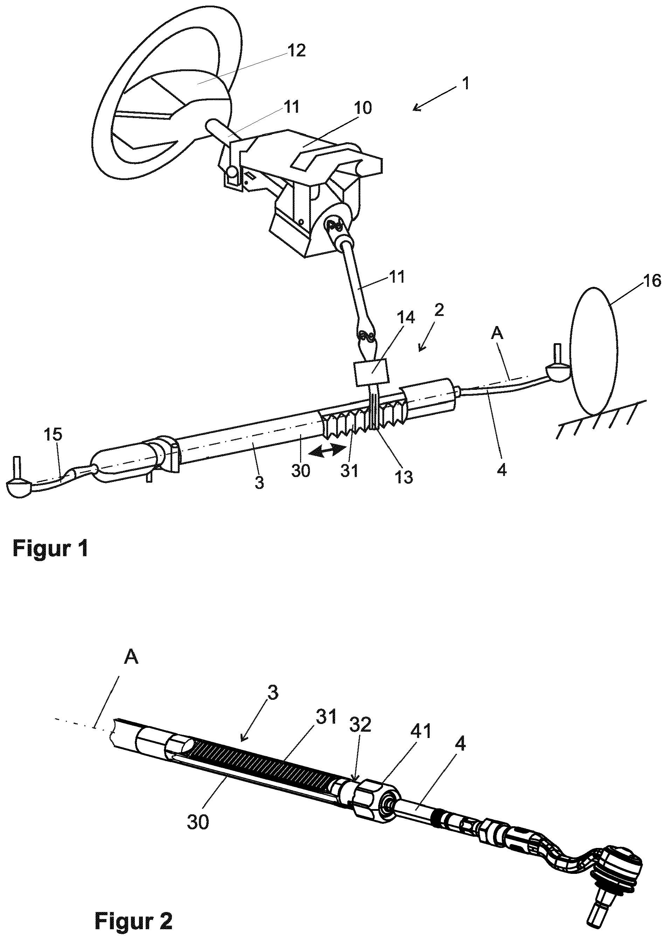

Figur 1 zeigt eine schematische perspektivische Darstellung eines Kraftfahrzeug-Lenksystems 1 mit einer Trageinheit 10, die an einer nicht dargestellten Fahrzeugkarosserie anbringbaren, und in der eine Lenkwelle 11 drehbar gelagert ist.

An dem in Fahrtrichtung hinteren Ende - in Figur 1 nach links weisend - ist an der Lenkwelle 11 ein Lenkrad 12 zur Einbringung manueller Lenkbefehle durch Drehung der Lenkwelle 11 angebracht.

An der Lenkwelle 11 kann ferner ein Hilfskraftantrieb 14 vorgesehen sein, der abhängig von dem in das Lenkrad 12 eingebrachten manuellen Lenkmoment ein unterstützendes Hilfsmoment in die Lenkwelle 11 einkoppelt. Der Hilfskraftantrieb 14 kann in an sich bekannter Weise einen elektromotorischen Stellantrieb umfassen, der direkt oder über ein Getriebe mit der Lenkwelle 11 gekuppelt ist.

In einem Lenkgetriebe 2, welches in Figur 1 zur besseren Übersicht schematisch ohne Gehäuse dargestellt ist, ist ein am vorderen Ende der Lenkwelle 11 angebrachtes Ritzel 13 drehbar gelagert.

Das Lenkgetriebe 2 weist eine in ihrer Grundform stangenförmige, erfindungsgemäße Zahnstange 3 auf, die sich in Richtung ihrer Längsachse A axial, d.h. in ihrer Längsrichtung erstreckt. Die dargestellte Zahnstange 3 ist durchgehend massiv ausgebildet.

Die Zahnstange 3 ist in dem Lenkgetriebe 2 in Längsrichtung verschieblich gelagert, wie mit dem Doppelpfeil angedeutet ist.

Die beiden äußeren Enden der Zahnstange 3 sind über Spurstangen 4 mit den Achsschenkeln lenkbarer Räder 16 verbunden.

Die Zahnstange 3 weist in einer ersten Ausführungsform, die in Figur 2 freigestellt gezeigt ist, einen massiven Grundkörper 30 auf, der einen Verzahnungsabschnitt mit einer Verzahnung 31 mit einer Mehrzahl von quer zur Längsachse A verlaufenden, in Längsrichtung im Zahnabstand zueinander angeordneten Zähnen aufweist. Das Ritzel 13 greift in die Verzahnung 31 des Verzahnungsabschnitts ein, so dass eine Drehung der Lenkwelle 11 über eine Längsverschiebung der Zahnstange 3 in einen Lenkeinschlag der Räder 16 umgesetzt wird.

Die Spurstange 4 ist über ein Axialgelenk 41 mit einem erfindungsgemäßen Anbindungsabschnitt verbunden, der in der Darstellung in dem nach rechts weisenden Endabschnitt einstückig mit der Zahnstange 3 ausgebildet ist.

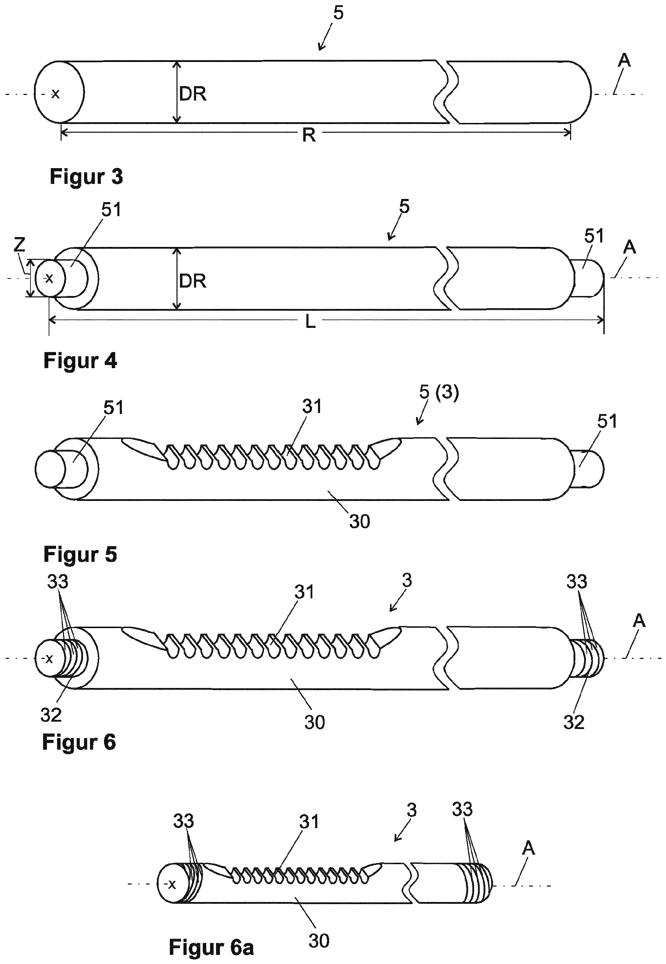

Der Anbindungsabschnitt ist in dieser Ausführung als koaxialer, stirnseitig nach außen vorstehender Gewindezapfen 32 mit einem Außengewinde 33 ausgebildet, wie in Figur 6 dargestellt ist. An beiden Endabschnitten der Zahnstange 3 sind zwei gleichartige Gewindezapfen 32 ausgebildet.

Die Herstellung einer Zahnstange 3 in einer ersten Ausführungsform nach dem erfindungsgemäßen Verfahren ist schematisch in aufeinander folgenden Fertigungsschritten in den Figuren 3 bis 6 gezeigt.

Figur 3 zeigt einen Rohling 5, auch als Rohteil bezeichnet, der als zylindrischer Abschnitt der Länge R aus massivem Stahl-Vollmaterial mit einem Durchmesser DR bereitgestellt wird.

Im nächsten, dem zweiten Schritt, der in Figur 4 dargestellt ist, wird der Rohling 5 in beiden Endbereichen abschnittweise plastisch umgeformt, konkret durch eine in radialer Richtung nach ausgeübte Umformkraft, zur Ausbildung von koaxial stirnseitig vorstehenden, zylindrischen Zapfen 51. Die plastische Umformung erfolgt vorzugsweise durch Warmumformung, wie beispielsweise Formwalzen oder Schmieden. Hierzu wird der Rohling 5 vor der Umformung auf eine zum Schmieden geeignete Vorwärmtemperatur erwärmt, und radial zusammengepresst, beispielsweise im Schmiedegesenk oder in einem Walzgerüst.

Die Zapfen 51 haben einen Durchmesser Z, der kleiner ist als der Roh-Durchmesser DR. Daher tritt bei der plastischen Umformung durch das radiale Pressen ein axialer Materialfluss auf, so dass sich die Länge R des Rohlings 5 auf die Länge L der Zahnstange 3 vergrößert. Dabei bildet sich in dem warm umgeformten Stahl im Bereich der Zapfen 51 eine Gefügestruktur mit axial ausgerichteten Gefügelinien aus, welche sich durch eine erhöhte Festigkeit in axialer Richtung auszeichnet.

Im dritten Schritt, der in Figur 5 gezeugt ist, wird mittels eines geeigneten Schmiedewerkzeugs, beispielsweise in einem Gesenk, eine Verzahnung 31 in den Rohling 5 plastisch eingeformt. Diese Warmumformung kann bevorzugt direkt im Anschluss an die Ausbildung der Zapfen 5 erfolgen, wobei sich der Rohling 5 ausgehend von der Vorwärmtemperatur nur geringfügig abgekühlt hat, so dass das Schmieden der Verzahnung 31 in einer Hitze erfolgen kann.

Im vierten Schritt, der in Figur 6 gezeigt ist, wird mittels plastischer Umformung in die Zapfen 51 jeweils ein Gewinde 33, konkret ein Außengewinde, eingeformt, so dass die Gewindezapfen 32 ausgebildet werden.

Alternativ zu der vorangehend beschriebenen Abfolge der Schritte ist auch eine andere Reihenfolge möglich. Beispielsweise könnte die Verzahnung 31 gemäß Figur 5 vor der Erzeugung der Zapfen 51 geschmiedet werden, oder auch nach der Erzeugung des Gewindes 33 auf dem Zapfen 51. Mittels entsprechend ausgestalteter Fertigungsanlagen mit parallel arbeitenden Bearbeitungsstationen ist es überdies denkbar und möglich die dargestellten Umformprozesse zumindest teilweise gleichzeitig auszuführen.

Wie in der alternativen Ausführungsvariante der Figur 6a dargestellt ist, kann der Anbindungsabschnitt durch einen Endabschnitt der Zahnstange 3 mit dem Roh-Durchmesser DR gebildet sein. Mit anderen Worten wird das Gewinde 33 direkt auf dem Endabschnitt der Zahnstange 3 mit dem Roh-Durchmesser DR eingeformt. Somit kann auf die Ausbildung des durchmesserreduzierten Zapfens verzichtet werden, jedoch ist dadurch ein größerer Bauraumbedarf erforderlich.

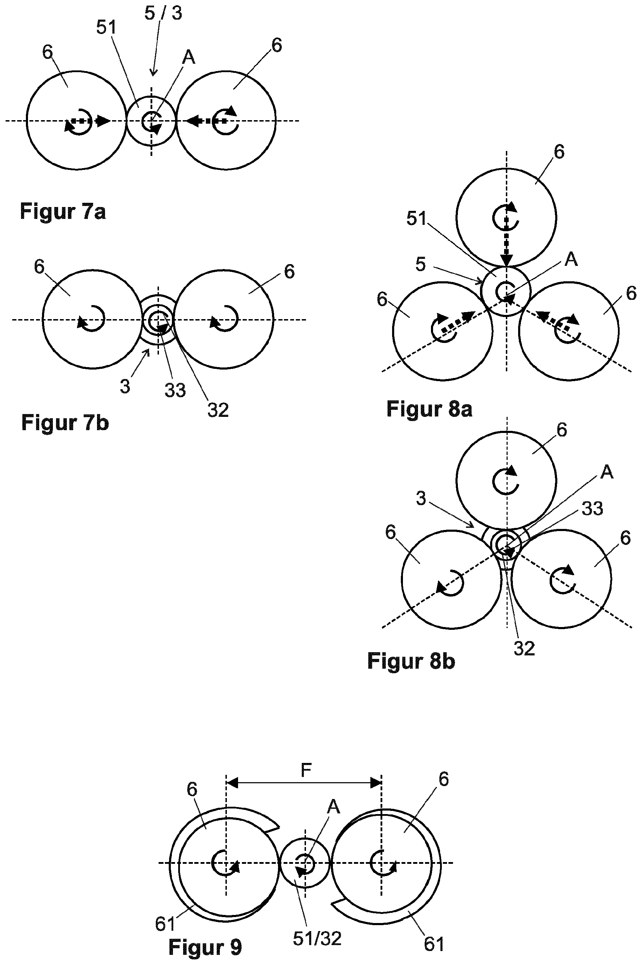

Das Einformen der Gewinde 33 kann durch Warmumformung oder Halbwarmumformung unter Ausnutzung der nach dem Schmieden der Zapfen 51 und der Verzahnung 31 noch vorhandenen Restwärme erfolgen, beispielsweise durch ein Gewinde-Walzverfahren, wie es nachfolgend in Figur 7a, b oder Figur 8a, b oder Figur 9 schematisch dargestellt ist. Es ist auch denkbar und möglich das Gewinde mittels Kaltumformung einzubringen.

Das Gewinde 33 an den Zapfen 51 des Rohlings 5 kann mittels eines Gewinde-Walzverfahrens plastisch eingeformt werden, wie in Figuren 7 bis 9 schematisch gezeigt. In den Figuren 7a, 8a und 9 sind axiale Ansichten eines teilweise bearbeiteten Rohlings 5, beispielsweise gemäß Figur 4 oder Figur 5, unmittelbar vor der Erzeugung eines Gewindes 33 auf einem Zapfen 51 gezeigt. Dieser Zapfen 51 wird dann zu einem Gewindezapfen 32 plastisch umgeformt, wie im Ergebnis in den Figuren 7b und 8b gezeigt ist.

In der in Figuren 7a, 8a und 9 gezeigten Ausgangssituation kann der Rohling 5 samt der Zapfen 51 eine noch eine Restwärme aus der vorangehenden Erwärmung auf die Vorwärmtemperatur zum Schmieden der Zapfen 51 aufweisen, so dass die Bearbeitungstemperatur unterhalb der Vorwärmtemperatur liegt, aber immer noch eine Warmumformung ermöglicht. Alternativ oder zusätzlich können zumindest die Zapfen 51 vor der Einbringung des Gewindes 33 nochmals erwärmt werden, um eine zur Warmumformung optimale Bearbeitungstemperatur zu gewährleisten. Die partielle Erwärmung kann beispielsweise mittels Induktion erfolgen.

In Figur 7a ist der Zapfen 51 zwischen zwei gleichsinnig um ihre Achsen rotierend angetriebenen Profilwalzen 6 angeordnet. Die Profilwalzen 6 weisen auf ihren Außenumfang jeweils ein schraubenförmiges Walzprofil auf. Wie in Figur 7a mit den gestrichelten Pfeilen angedeutet werden die Profilwalzen 6 gegeneinander, jeweils in Richtung auf die Achse A des Zapfens 51 aufeinander zu bewegt, bis sie in Walzkontakt mit dem Außenumfang des Zapfens 51 kommen. Durch den Walzkontakt wird der Zapfen 51 gegensinnig rotiert, und das schraubenförmige Walzprofil wird als Gewinde 33 in den Außenumfang des Zapfens 51 plastisch eingewalzt, wie in dem in Figur 7b gezeigten Endzustand erkennbar ist.

Alternativ oder zusätzlich kann der Rohling 5 mit den Zapfen 51 unabhängig von den Profilwalzen 6 durch einen eigenen Antrieb drehend angetrieben sein.

Figur 8a und 8b zeigen ein im Prinzip ähnlichen Gewinde-Walzverfahren wie Figuren 7a und 7b, wobei anstelle der beiden Profilwalzen 6 aus Figur 7 nunmehr drei Profilwalzen 6 vorgesehen sind, die radial auf die Achse A zu bewegt werden. Vorteil ist die selbsttätige Zentrierung beim Gewindewalzen, welches auch als Formwalzen bezeichnet wird.

In Figur 9 ist ein alternatives Walzverfahren dargestellt, bei dem die Profilwalzen 6 als Formwalzen mit einem in Umfangsrichtung radial ansteigenden Formprofil 61 ausgebildet sind. Dadurch können die Profilwalzen 6 beim Gewindewalzen in einem festen Abstand F zueinander bleiben.

Dank der Einbringung der Gewinde mittels einer Umformoperation kann eine Verfestigung des Gewindes erzielt werden, so dass dieses gegenüber eines mittels Zerspanung eingebrachten Gewindes verbesserte mechanische Eigenschaften aufweist. Weiters wird durch die Umformung eine verbesserte Lebensdauer infolge nicht-unterbrochener Materialfasern erreicht und die Prozesskette wirtschaftlich verkürzt.

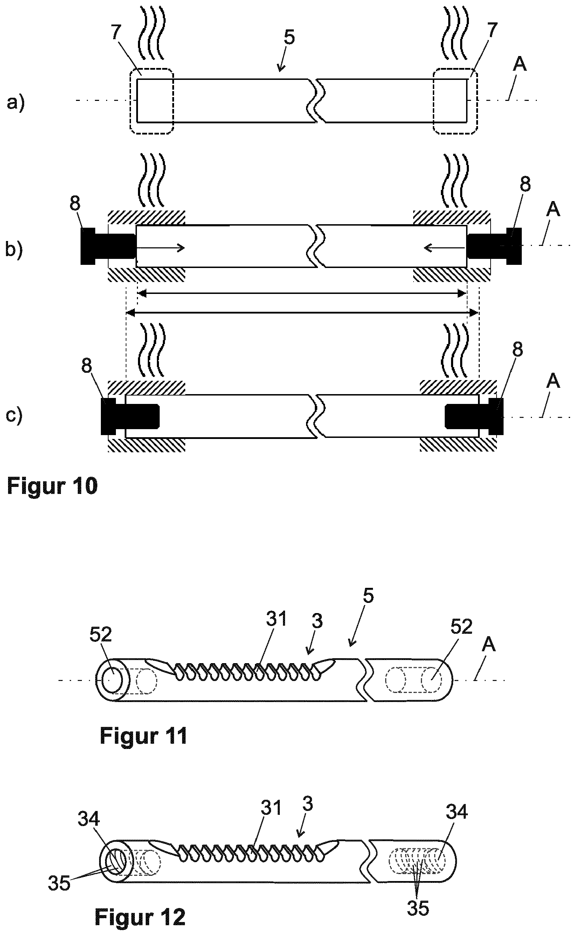

In Figur 10a, b, c sind aufeinanderfolgende Bearbeitungsphasen eines Warmumformverfahrens schematisch dargestellt, um einen teilweise bearbeiteten Rohling 5 gemäß Figur 11 o- der eine fertige Zahnstange 3 in einer zweiten Ausführungsform gemäß Figur 12 zu erzeugen. Diese zweite Ausführungsform weist anstelle der Gewindezapfen 32 als Anbindungsabschnitte Gewindeöffnungen 34 mit jeweils einem Innengewinde 35 auf.

In Figur 10a wird der Rohling 5 mittels Vorwärmeinrichtungen 7 auf Umformtemperatur gebracht, zumindest in den Endabschnitten.

Anschließend werden stirnseitig im Wesentlichen zylindrische Napfstempel 8 axial eingepresst, wie in Figur 10b mit den Pfeilen angedeutet ist, bis die in Figur 10c dargestellte Endposition erreicht ist. Auf diese Weise werden napfförmige Gewinde-Kernlöcher 52 in den Rohling 5 plastisch eingeformt, um einen teilweise bearbeiteten Rohling 5 zu erzeugen, der in Figur 11 gezeigt ist. Die Warmumformung kann im Napf-Rückwärtsfliesspressen oder Napf-Pressen erfolgen, bei dem durch das Einpressen des Napfstempel 8 das Material im Wesentlichen in axialer Richtung fließt.

In einem nachfolgenden Bearbeitungsschritt kann in die Kernlöcher 52 jeweils ein Innengewinde 35 eingebracht werden, vorzugsweise durch plastische Umformung wie Gewindepressen oder Gewindewalzen. Dadurch wird eine Zahnstange 3 gemäß der zweiten Ausführung erzeugt, wie in Figur 12 dargestellt.

### Bezugszeichenliste

- 1: Kraftfahrzeug-Lenksystem
- 10: Trageinheit
- 11: Lenkwelle
- 12: Lenkrad
- 13: Ritzel
- 14: Hilfskraftantrieb
- 15: Spurstangen
- 16: Rad
- 2: Lenkgetriebe
- 21: Gehäuse
- 3: Zahnstange
- 30: Grundkörper
- 31: Verzahnung
- 32: Gewindezapfen
- 33: Gewinde (Außengewinde)
- 34: Gewindeöffnungen
- 35: Gewinde (Innengewinde)
- 4: Spurstange
- 41: Axialgelenk
- 5: Rohling
- 51: Zapfen
- 52: Kernloch
- 6: Profilwalze
- 61: Formprofil
- 7: Vorwärmeinrichtungen
- 8: Napfstempel

- A: Achse
- R: Länge (des Rohlings 5)
- DR: Durchmesser (des Rohlings 5)
- Z: Durchmesser (des Zapfens 51)
- F: Abstand

## Patentansprüche

1. Zahnstange (3) für ein Lenkgetriebe eines Kraftfahrzeugs, die sich in Längsrichtung einer Längsachse (L) axial erstreckt und einen Verzahnungsabschnitt mit einer Verzahnung (31) aufweist, und die in mindestens einem axialen Endbereich einen Anschlussabschnitt (32, 34) mit einem Anschlusselement zur Verbindung mit einer Spurstange (4) aufweist, wobei der Verzahnungsabschnitt und der Anschlussabschnitt (32, 34) einstückig ausgebildet sind,
**dadurch gekennzeichnet,**
**dass** der Anschlussabschnitt (32, 34) eine plastische Umformung aufweist.

2. Zahnstange nach Anspruch 1, **dadurch gekennzeichnet, dass** der Anschlussabschnitt (32, 34) gewalzt oder geschmiedet ist.

3. Zahnstange nach einem der vorangehenden Ansprüche, **dadurch gekennzeichnet, dass** der Anschlussabschnitt (32, 34) einen kleineren Querschnitt hat als der Verzahnungsabschnitt.

4. Zahnstange nach einem der vorangehenden Ansprüche, **dadurch gekennzeichnet, dass** der Anschlussabschnitt (32, 34) einen Gewindeabschnitt aufweist (32, 34).

5. Zahnstange nach Anspruch 4, **dadurch gekennzeichnet, dass** der Gewindeabschnitt (32, 34) einen Gewindezapfen (32) oder eine Gewindeöffnung (34) aufweist.

6. Zahnstange nach einem der vorangehenden Ansprüche 4 oder 5, **dadurch gekennzeichnet, dass** der Gewindeabschnitt (32, 34) ein plastisch eingeformtes Gewinde (33, 35) aufweist.

7. Zahnstange nach einem der vorangehenden Ansprüche, **dadurch gekennzeichnet, dass** die Verzahnung (31) in einem Schmiedeabschnitt ausgebildet ist.

8. Lenkgetriebe (2) für ein Kraftfahrzeug, umfassend eine in Richtung ihrer Längsachse (L) verschieblich gelagerte Zahnstange (3), die eine Verzahnung (31) und mindestens einen endseitigen Anschlussabschnitt (32, 34) aufweist, wobei in die Verzahnung (31) ein drehbar gelagertes Lenkritzel (13) eingreift, und ein Anschlussabschnitt (32, 34) ausgebildet ist zum Anschluss einer Spurstange (4) einer Kraftfahrzeuglenkung (1),
**dadurch gekennzeichnet,**
**dass** die Zahnstange (3) ausgebildet ist gemäß einem der vorangehenden Ansprüche 1 bis 7.

9. Verfahren zur Herstellung einer Zahnstange (3) für ein Lenkgetriebe eines Kraftfahrzeugs, die sich entlang einer Längsachse (L) erstreckt und mindestens einen Verzahnungsabschnitt mit einer Verzahnung (31) und mindestens einen mit dem Verzahnungsabschnitt einstückig ausgebildeten Anschlussabschnitt (32, 34) aufweist, bei dem die Verzahnung (31) und der Anschlussabschnitt (32, 34) an einem Rohling (5) ausgebildet werden,
**gekennzeichnet durch den zumindest einen Schritt:**
dass der Anschlussabschnitt (32, 34) **durch** plastische Umformung des Rohlings (5) erzeugt wird.

10. Verfahren nach Anspruch 9, **dadurch gekennzeichnet, dass** die Verzahnung (31) durch plastische Umformung des Rohlings (5) erzeugt wird.

11. Verfahren nach einem der Ansprüche 9 bis 10, **dadurch gekennzeichnet, dass** der Anschlussabschnitt (32, 34) und die Verzahnung (31) durch Warmumformung erzeugt werden.

12. Verfahren nach einem der Ansprüche 10 bis 11, **dadurch gekennzeichnet, dass** der Rohling (5) auf eine Vorwärmtemperatur erwärmt wird, und eine Warmumformung zur Erzeugung des Anschlussabschnitts (32, 34) und des Verzahnungsabschnitts (31) erfolgt.

13. Verfahren nach einem der Ansprüche 9 bis 12, **dadurch gekennzeichnet, dass** der Anschlussabschnitt (32, 34) auf einen kleineren Querschnitt umgeformt wird als der Verzahnungsabschnitt.

14. Verfahren nach einem der Ansprüche 9 bis 13, **dadurch gekennzeichnet, dass** an den Rohling (5) ein Zapfen (51) angeformt oder eine Einformung (52) eingeformt wird, und an den Zapfen (51) oder in die Einformung (52) ein Gewinde (33, 35) eingebracht wird.

15. Verfahren nach Anspruch 14, **dadurch gekennzeichnet, dass** das Gewinde (33, 35) durch plastische Umformung erzeugt wird.
